(19) Europäisches Patentamt
European Patent Office
Office européen des brevets

(11) Publication number: 0 024 247 A1

# (12) EUROPEAN PATENT APPLICATION

(21) Application number: 80401192.2

(22) Date of filing: 14.08.80

(51) Int. Cl.[3]: C 02 F 5/10

(30) Priority: 16.08.79 US 66957

(43) Date of publication of application: 25.02.81 Bulletin 81/8

(84) Designated Contracting States: AT BE CH DE FR GB IT LI LU NL SE

(71) Applicant: CALGON CORPORATION
Route 60-Campbell's Run Road
Robinson Township Pennsylvania15205(US)

(72) Inventor: Ralston, Paul H.
29 Sante Fe Drive
Bethel Park Pennsylvania 15102(US)

(74) Representative: Martin, Jean-Jacques et al,
Cabinet REGIMBEAU 26, Avenue Kléber
F-75116 Paris(FR)

## (54) Composition and method for the control of scale and deposits in gas-liquid separations.

(57) The use, as agents for the control of water formed scale and/or water borne deposits, of low molecular weight polymers and/or phosphonates of the formula:

$$CH_3C(OH)(PO_3X_2)_2$$

or

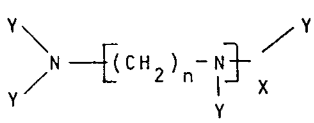

wherein Y is $-CH_2PO_3X_2$; X is $H^+$, $NH_4^+$ or alkali metal; n is 1 to 6; and when n is 1 to 3, x is 2 to 6; and when n is 4 to 6, x is 1 to 6.

EP 0 024 247 A1

# "COMPOSITION AND METHOD FOR THE CONTROL OF SCALE AND DEPOSITS IN GAS-LIQUID SEPARATIONS"

This invention relates to a composition and method for the control and inhibition of water formed scale and/or water borne deposits in gas/liquid separations.

More particularly, this invention relates to a composition and method in which low molecular weight polymers and/or certain phosphonates are utilized for the control and inhibition of water formed scale and/or water borne deposits in gas/liquid separations.

Gas/liquid separation processes are commonly used in a number of industries such as ammonia distillation, coal coking, and gas scrubbing operations. In these processes, calcium sulfite, calcium sulfate, calcium fluoride and calcium carbonate scales are commonly formed on the surfaces of the mechanical equipment utilized in these processes.

We have found that certain low molecular weight polymers and phosphonates of the formula:

$CH_3C(OH)(PO_3X_2)_2$

or

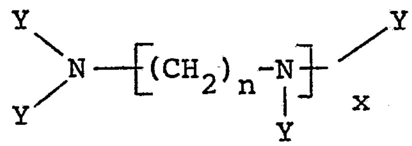

wherein Y is $-CH_2PO_3X_2$; X is $H^+$, $NH_4^+$ or alkali metal; n is 1 to 6; and when n is 1 to 3, x is 2 to 6; and when n is 4 to 6, x is 1 to 6;

are useful for the control and inhibition of water formed scale and/or water borne deposits in gas/liquid separations. Suitable polymers are those having a molecular weight of from 250 to 25,000, preferably 500 to 2,500, and include carboxylic acid containing polymers, derivatives and salts thereof, such as the ammonium or alkali metal salt. Representative polymers include polyacrylic acid, polymaleic acid, polymethacrylic acid, sodium polyacrylate and hydrolyzed polyacrylamides. Representative phosphonates which are useful in the compositions and methods of this invention include hexamethylenediamine tetramethylene phosphonic acid, hexamethylene triamine pentamethylene phosphonic acid, diethylenetriamine pentamethylene phosphonic acid, and hydroxyethylidene diphosphonic acid. The most preferred compositions, however, contain the polyacrylates, the polymaleates and hexamethylene diamine tetramethylene phosphonic acid or salts thereof. In use, these compositions are added to the water being treated at concentrations of about 1 mg./l. to 500 mg./l., preferably about 5 mg./l. to 100 mg./l.

The compositions and methods of this invention will be more readily understood upon reference to the following nonlimiting examples in which a stagnant flask test was used. The anion salt solution, the dilution water and the inhibitor were added prior to the addition of the cation salt solution. Following mixing, the flasks were placed in an oven at 150°F. for 24 hours. At the end of the test period, the supernatant solutions were analyzed for $Ca^{+2}$ and the percent scale inhibition determined from the calcium ion concentration. With no inhibitor present, normal precipitation occurs and the calcium ion titration represents 0 percent inhibition. With sufficient inhibitor present and no precipitation, the calcium ion titration represents 100 percent scale inhibition. Intermediate calcium ion titrations represent intermediate percent of scale inhibition.

The inhibitors evaluated in this program were:

$AM_6P$-1 which is hexamethylenediaminotetramethylene phosphonic acid.

HEDP which is hydroxyethylidene diphosphonic acid.

PA which is polyacrylic acid.

PM which is polymaleic acid.

## EXAMPLE 1

The calcium fluoride ($CaF_2$) stability tests were carried out at 7.1X saturation (150°F., stagnant, 24 hours, equilibrium saturation at 33 mg./l. $CaF_2$). Stability tests were carried out at 1, 2, 4, 6 and 8 mg./l. active inhibitor and the percent inhibition data are noted in Table I.

TABLE I

Percent Inhibition $CaF_2$
7.1X Saturation-150°F.-24 Hours-Stagnant-pH 9.0-9.5

| | Milligrams/Liter Active | | | | |
|---|---|---|---|---|---|
| Inhibitor | 1 | 2 | 4 | 6 | 8 |
| Control | 0 | 0 | 0 | 0 | 0 |
| $AM_6P$-1 | -- | 30 | 28 | 26 | 24 |
| HEDP | 41 | 52 | 47 | 39 | 46 |
| PA | 33 | 33 | 43 | 12 | 4 |

EXAMPLE 2

The calcium sulfite ($CaSO_3$) solubility tests were carried out at 4.7X saturation (150°F., stagnant, pH 9-9.5, 24 hours, equilibrium saturation at 258 mg./l. $CaSO_3$). Threshold stability tests were performed at 2, 4, 6, 8, 10 and 14 mg./l. inhibitor with the percent inhibition data tabulated in Table II.

Percent Inhibition $CaSO_3$
4.7X Saturation-150°F.-24 Hours-Stagnant-pH 9-9.5

| Inhibitor | Milligrams/Liter Active 2 | 4 | 8 | 10 | 14 |
|---|---|---|---|---|---|
| Control | 0 | 0 | 0 | 0 | 0 |
| $AM_6P$-1 | -- | 25 | 48 | 60 | 82 |
| HEDP | 30 | 44 | 48 | 48 | 57 |
| PA | 14 | 22 | 39 | 49 | 82 |

EXAMPLE 3

Based on the threshold screening tests for $CaSO_3$ and $CaF_2$ alone, inhibitor compositions were evaluated in a mixed $CaSO_3/CaF_2$ system. In these experiments, the pH (pH 9.0-9.5), the temperature (150°F.) and the storage conditions (24 hours stagnant) were maintained the same as used in the previous screening of the individual scales. Also, the supersaturation level of the $CaSO_3$ was not changed, but the $CaF_2$ level was reduced to 2X. This change was made since the $CaF_2$ supersaturation level tested earlier (Table I, 7.1X saturation) was unreasonably high.

The mixed $CaSO_3/CaF_2$ solution used in the test contained 440 mg./l. $Ca^{+2}$, 801 mg./l. $SO_3^{-2}$ and 38 mg./l. $F^{-1}$. The overall supersaturation level was about 4.5X as indicated by titration of the theoretical soluble $Ca^{+2}$ and the equilibrium calcium concentration in the uninhibited test solution (control). The deposit was analyzed by X-ray/microscope and was found to contain a similar distribution of

scaling salts (major, $CaSO_3 \cdot 0.5\ H_2O$; low minor, $CaF_2$) as found in a plant deposit from the trays of the fixed still.

The experimental threshold screening tests in the $CaSO_3/CaF_2$ water were carried out at 2, 10 and 12 mg./l. of active inhibitor composition with pairs of the individual inhibitors being evaluated at 1:1 ratios.

Experimental results are shown in Table III.

Table III

Percent Inhibition-Multiple Inhibitors
$CaSO_3/CaF_2$ (4.5X Saturation)-150°F.
24 Hours-Stagnant-pH 9.0-9.5

| 1:1 Inhibitor | Milligrams/Liter Active 2 | 10 | 12 |
|---|---|---|---|
| Control | 0 | 0 | 0 |
| HEDP/$AM_6P$-1 | 38 | 50 | 49 |
| HEDP/PA | 21 | -- | 40 |
| $AM_6P$-1/PA | 14 | 49 | 57 |
| PA/PM | 21 | -- | 72 |

Using the preferred inhibitor compositions and the same test procedure described in Table III, inhibitor pairs were evaluated at ratios of 0.25:1, 0.5:1, 1:1, 2:1 and 4:1. The results are summarized in Table IV.

TABLE IV

Percent Inhibition
Inhibitor Pairs at 12 mg./l. (Total)
$CaSO_3/CaF_2$-150°F.-24 Hours Stagnant-pH 9.0-9.5

| Inhibitor | 0.25:1 | 0.5:1 | 1:1 | 2:1 | 4:1 |
|---|---|---|---|---|---|
| Control | 0 | 0 | 0 | 0 | 0 |
| PA:$AM_6$P-1 | 66 | 86 | 62 | 83 | 52 |
| PA:PM | 81 | 96 | 79 | 95 | 85 |
| PM:$AM_6$P-1 | 74 | 99 | 88 | 91 | 52 |

EXAMPLE 4

As a result of the inhibitor ratio data in Table IV covering the preferred inhibitor pairs, compositions were selected for further testing. The compositions were evaluated at 12 mg./l. active inhibitor using the standard $CaSO_3/CaF_2$ water and procedure described previously (150°F., 24 hours stagnant storage, pH 9-9.5).

The percent scale inhibition (12 mg./l. active inhibitor) for the compositions is noted in Table V.

TABLE V

Percent Inhibition
$CaSO_3/CaF_2$-150°F.-24 Hours Stagnant-pH 9-9.5

| Inhibitor Concentration (Active) (mg./l.) | | | |
|---|---|---|---|
| $AM_6P-1$ | PA | PM | Percent Inhibition |
| 0.0 | 0.0 | 0.0 | 0 |
| 12.0 | ---- | ---- | 40 |
| ---- | 12.0 | ---- | 69 |
| ---- | ---- | 12.0 | 51 |
| 4.0 | 8.0 | ---- | 48 |
| 3.6 | 7.2 | 1.2 | 48 |
| 8.0 | 4.0 | ---- | 59 |
| 7.2 | 3.6 | 1.2 | 56 |

The supersaturation level, as judged by the equilibrium $Ca^{+2}$ concentration (no inhibitor) and the theoretical $Ca^{+2}$ concentration (no precipitation) was 5X rather than the normal 4.5X. This higher supersaturation concentration was related to the 165°F. storage temperature. Thus, the percent inhibition data for this test series will be somewhat lower than when the supersaturation level was of the normal 4.5X. None the less, the data is a good comparison of the threshold effectiveness of the several compositions.

In summary, the results indicate that all the compositions tested are effective threshold scale inhibitors for the $CaSO_3/CaF_2$ system.

I CLAIM:

1. A composition for the inhibition of water formed scale and/or water borne deposits in gas/liquid separation processes which comprises at least one low molecular weight polymer and/or a phosphonate of the formula:

$$CH_3C(OH)(PO_3X_2)_2$$

or

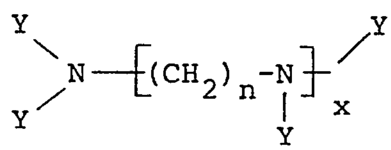

wherein Y is $-CH_2PO_3X_2$; X is $H^+$, $NH_4^+$ or alkali metal; n is 1 to 6; and when n is 1 to 3, x is 2 to 6; and when n is 4 to 6, x is 1 to 6.

2. A composition as in Claim 1 wherein the polymer has a molecular weight of from 250 to 25,000.

3. A composition as in Claim 2 wherein the polymer is at least one member selected from the group consisting of polyacrylic acid, polymethacrylic acid, polymaleic acid, sodium polyacrylate, hydrolyzed polyacrylamides, and salts thereof.

4. A composition as in Claim 1 wherein the phosphonate is hexamethylenediamine tetramethylene phosphonic acid.

5. A method for the inhibition of water formed scale and/or water borne deposits in gas/liquid separation processes which comprises maintaining in the water from about

1 mg./l. to 500 mg./l. of a composition comprising at least one low molecular weight polymer and/or a phosphonate of the formula:

$$CH_3C(OH)(PO_3X_2)_2$$

or

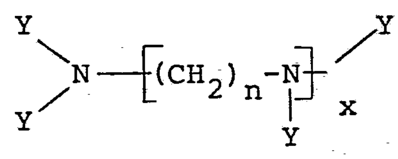

wherein Y is $-CH_2PO_3X_2$; X is $H^+$, $NH_4^+$ or alkali metal; n is 1 to 6; and when n is 1 to 3, x is 2 to 6; and when n is 4 to 6, x is 1 to 6.

6. A method as in Claim 5 wherein the polymer has a molecular weight of from 250 to 25,000.

7. A method as in Claim 6 wherein the polymer is at least one member selected from the group consisting of polyacrylic acid, polymethacrylic acid, polymaleic acid, sodium polyacrylate, hydrolyzed polyacrylamides, and salts thereof.

8. A method as in Claim 5 wherein the phosphonate is hexamethylenediamine tetramethylene phosphonic acid.

European Patent Office

# EUROPEAN SEARCH REPORT

0024247
Application number
EP 80401192.2

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 4 072 607 (SCHILLER)<br>+ Totality +<br>-- | 1-3, 5-7 | C 02 F 5/10 |
| X | DE - B2 - 2 159 172 (CIBA)<br>+ Totality +<br>-- | 1,3,7 | |
| X | DE - A - 1 808 824 (GRACE)<br>+ Totality +<br>-- | 1,2,3 | |
| X | US - A - 3 715 307 (JOHNSON)<br>+ Totality; especially column 1, lines 39-57; column 3, lines 40-69 +<br>-- | 1,3,7 | TECHNICAL FIELDS SEARCHED (Int.Cl. 3)<br>C 02 F |
| X | US - A - 3 634 257 (PORTER)<br>+ Totality; especially column 1, lines 59-63 +<br>-- | 1 | |
| X | US - A - 3 336 221 (RALSTON)<br>+ Totality +<br>-- | 1 | |
| X | DE - B - 1 792 242 (MONSANTO)<br>+ Totality; especially column 9, line 56 - column 10, line 47 +<br>-- | 1,4,8 | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | US - A - 3 890 228 (HWA)<br>+ Column 3, formula 1, lines 6-12; abstract +<br>-- | 1 | |
| X | The present search report has been drawn up for all claims | | &: member of the same patent family, corresponding document |

| Place of search | Date of completion of the search | Examiner |
|---|---|---|
| VIENNA | 15-10-1980 | GRÜNDIG |

EPO Form 1503.1 06.78

0024247

European Patent Office

Application number
EP 80401192.2

# EUROPEAN SEARCH REPORT

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | AT - B - 302 207 (BENCKISER)<br>+ Totality +<br>-- | 1 | |
| X | US - A - 3 663 448 (RALSTON)<br>+ Totality +<br>-- | 1,2 | |
| X | AT - B - 295 422 (BENCKISER)<br>+ Totality +<br>-- | 1 | |
| X | AT - B - 291 135 (BENCKISER)<br>+ Totality +<br>-- | 1 | TECHNICAL FIELDS SEARCHED (Int. Cl. 3) |
| X | DE - A1 - 2 725 199 (BETZ)<br>+ Totality +<br>-- | 1 | |
| P,X | DE - A1 - 2 923 718 (CHEMED) (20-12-1979)<br>+ Totality +<br>& SE-A - 7 905 174 (16-12-1979)<br>& GB-A - 2 023 121 (28-12-1979)<br>& JP-A2-55 001 897 (09-01-1980)<br>& FR-A1- 2 431 999 (22-02-1980)<br>-- | 1-3 | |
| X | DE - A - 2 140 149 (CHEMED)<br>+ Totality +<br>-- | 1-7 | |
| X | US - A - 3 959 167 (HWA)<br>+ Totality +<br>-- | 1-7 | |
| X | DE - A - 2 145 208 (MONSANTO)<br>+ Totality +<br>---- | 8 | |